# EUROPEAN PATENT APPLICATION

(11) **EP 4 480 842 A2**
(43) Date of publication of application: **25.12.2024**
(21) Application number: 24182312.9
(22) Date of filing: 14.06.2024
(51) Int. Cl.: B65D 5/74, B29C 45/14

(54) **OPENING DEVICE FOR A PACKAGE, MOLD FOR MOLDING AN OPENING DEVICE AND PACKAGE HAVING AN OPENING DEVICE**

(30) Priority: 21.06.2023 IT 202300012813
(71) Applicant: Tetra Laval Holdings & Finance S.A., 1009 Pully (CH)
(72) Inventor: ZANON, Paolo, 41123 Modena (IT); DE PAOLA, Rocco, 41123 Modena (IT); VIETRI, Anna Rosa, 41123 Modena (IT)
(74) Representative: Tetra Pak - Patent Attorneys SE

(57) **Abstract**

There is described an opening device (3) for a package (1) having a designated pour opening and being filled with a pourable product. The opening device (3) comprises a collar (9) having a central axis (E) and a pouring outlet (11), a lid (8) connected to the collar (9) and angularly movable about a hinge axis (G) between a closed position and an open position in which the lid (8), respectively closes and opens, the pouring outlet (11), a closing element (20) configured to close the designated pour opening and being detachably and/or rupturably attached to the collar (9) and a plurality of leg elements (38) connected to and protruding from the closing element (20) and being coupled to the lid (8). One main leg element (38a) of the plurality of leg elements (38) is farther away from the hinge axis (G) than the other leg elements (38). The main leg element (38a) is intersected by an intersection plane (H) comprising the central axis (E). The leg elements (38; 38a) are arranged asymmetric with respect to one another and with respect to the intersection plane (H).

## Description

### TECHNICAL FIELD

The present invention relates to an opening device for a package, preferentially a package having a main body formed from a multilayer packaging material, filled with a pourable product, even more particular filled with a pourable food product.

Furthermore, the present invention also relates to a mold for molding an opening device for a package, preferentially a package having a main body formed from a multilayer packaging material, filled with a pourable product, even more particular filled with a pourable food product.

Advantageously, the present invention also relates to a package, preferentially a package having a main body formed from a multilayer packaging material, filled with a pourable product, even more particular filled with a pourable food product, and comprising an opening device.

### BACKGROUND ART

As is known, many liquid or pourable food products, such as fruit juice, milk, milk-based drinks, drinking yoghurt, wine, tomato sauce, salt, sugar, etc., are sold in packages, in particular sealed packages, made of a sterilized packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. layers of polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Thus, such a type of package comprises a main body formed from a multilayer packaging material and has a designated pour opening, which allows the outpouring of the pourable product from the package, and an opening device arranged about the designated pour opening. The opening device is designed to seal the package prior to a first opening of the opening device.

Some variants of packages comprise a main body having a slanted top wall, i.e. the top wall of the main body is inclined with respect to a bottom wall of the main body. Accordingly, the opening device is connected to the inclined top wall.

In further detail, each opening device comprises a closing element configured to close the designated pour opening and being rupturably connected to an inner surface of a collar of the opening device and a lid being removably coupled to the collar and being movable between a closed position and an open position. Additionally, the opening device comprises a coupling element connected to the closing element and the lid and such that a movement of the lid from the closed position to the open position leads to a rupture of the closing element and to a separation of the closing element from the collar.

Known opening devices comprise leg elements interposed between a main wall of the closing element and the coupling element. The leg elements are symmetrically arranged with respect to a symmetry plane, which intersects two of the leg elements.

Even though the currently known opening devices provide for good results, a need is felt in the sector to further improve the opening devices and/or packages.

### DISCLOSURE OF INVENTION

It is therefore an object of the present invention to provide an improved opening device for a package, preferentially a package having a main body formed from a multilayer packaging material, filled with a pourable product, even more preferentially filled with a pourable food product.

It is another object of the present invention to provide a mold for molding an opening device for a package, preferentially a package having a main body formed from a multilayer packaging material, filled with a pourable product, even more preferentially filled with a pourable food product.

It is a further object of the present invention to provide an improved package, preferentially a package having a main body formed from a multilayer packaging material, filled with a pourable product, preferentially filled with a pourable food product, having an opening device.

According to the present invention, there is provided an opening device and a package according to the respective independent claims.

Further advantageous embodiments of the opening device and of the package are specified in the claims directly or indirectly depending on the respective independent claim.

According to the present invention, there is also provided a mold according to claim 8.

### BRIEF DESCRIPTION OF THE DRAWINGS

A non-limiting embodiment of the present invention will be described by way of example with reference to the accompanying drawings, in which:
Figure 1 is a schematic perspective view of a portion of a package having an opening device according to the present invention, with parts removed for clarity;
Figure 2 is a perspective view of the package of Figure 1 focusing on a detail of the opening device, with parts removed for clarity;
Figure 3 is an enlarged top view of the detail of the opening device of Figure 2, with parts removed for clarity;
Figure 4 is a sectioned view of the detail of Figure 3, with parts removed for clarity; and
Figure 5 is a perspective view of some portions of the detail of Figure 3, with parts removed for clarity.

### BEST MODES FOR CARRYING OUT THE INVENTION

Number 1 indicates as a whole a package (only partially shown to the extent necessary for the comprehension of the present invention) comprising:
- a main body 2, preferentially a main body formed from a multilayer packaging material, being filled and/or being fillable with a pourable product, preferentially a pourable food product, and preferentially having a designated pour opening (not shown and known as such) configured to allow for an outflow of the pourable product from main body 2; and
- an opening device 3, preferentially formed from a polymer material, coupled to main body 2 about the designated pour opening and configured to seal the designated pour opening and to be controllable so as to open the designated pour opening and to allow for the outpouring of the pourable product.

The pourable product may be milk, tomato sauce, milk-based drinks, yoghurt-based drinks, yoghurt, water, sugar, salt, juices, emulsions, and the like.

According to some preferred non-limiting embodiments, the packaging material may comprise at least a layer of fibrous material, such as e.g. a paper or cardboard layer, and at least two layers of heat-seal plastic material, e.g. polyethylene layers, interposing the layer of fibrous material in between one another. One of these two layers of heat-seal plastic material may define the inner face of main body 2 contacting the pourable product.

Preferably, the packaging material may also comprise a layer of gas- and light-barrier material, e.g. aluminum foil or ethylene vinyl alcohol (EVOH) film, in particular being arranged between one of the layers of heat-seal plastic material and the layer of fibrous material. Preferentially but not necessarily, the packaging material may also comprise a further layer of heat-seal plastic material being interposed between the layer of gas- and light-barrier material and the layer of fibrous material.

Preferentially, each package 1, preferentially the respective main body 2, may be obtained from a respective packaging blank of the multilayer packaging material. Preferentially, the packaging blank may define a precursor of the respective package 1, in particular the respective main body 2.

In more detail, the respective packaging blank may comprise the respective designated pour opening. According to some possible embodiments, the respective designated pour opening may be covered by a separation membrane. The separation membrane may be formed from a gas-barrier material, preferentially the separation membrane may be defined by a portion of the layer of the gas- and light-barrier material.

According to some preferred non-limiting embodiments, the multilayer packaging material may be provided in the form of a web, thereby the packaging blanks may be successively arranged with respect to one another. During the formation of packages 1, the web is formed into a tube, longitudinally sealed, filled with the pourable product and transversally sealed and cut at opposite end portions of the packaging blanks.

According to a preferred non-limiting embodiment, a portion of each opening device 3 may be applied, preferentially molded, onto the respective main body 2 or onto the respective packaging blank. Preferentially, each opening device 3 may be molded onto the respective packaging blank and about the designated pour opening. In particular and as will be explained further below, a first portion of opening device 3 may be molded onto the respective packaging blank and a second portion may be applied onto the first portion after molding of the first portion.

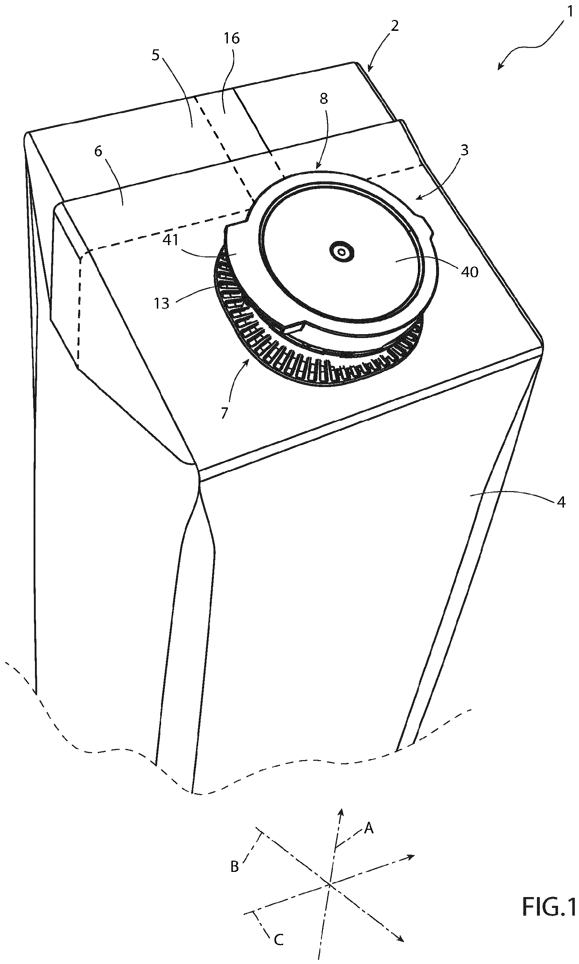

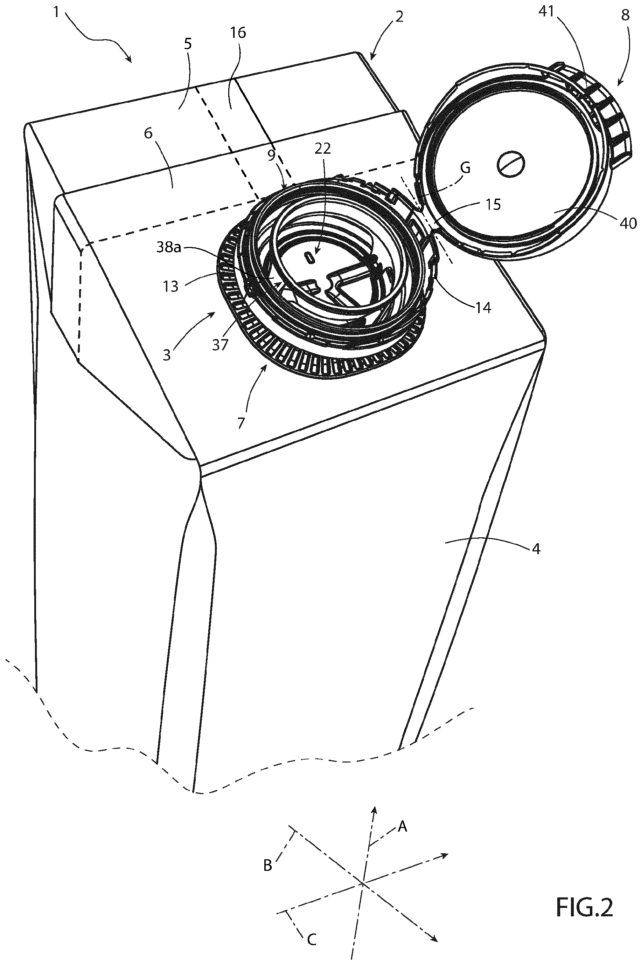

With particular reference to Figures 1 and 2, main body 2 may extend along a longitudinal axis A, a first transversal axis B perpendicular to longitudinal axis A and a second transversal axis C perpendicular to first transversal axis B and longitudinal axis A. Preferentially, the size of package 2 along longitudinal axis A may be larger than the size of package 2 along first transversal axis B and second transversal axis C.

Preferentially, main body 2 may be parallelepiped-shaped.

According to some preferred non-limiting embodiments, main body 2 may comprise a first wall (not shown and known as such), preferentially being transversal, more preferentially perpendicular, to longitudinal axis A, from which main body 2 may extend along longitudinal axis A. Preferentially, the first wall may define a support surface of package 1, preferentially main body 2, which may be designed to be put in contact with a support, such as e.g. a shelf, when, in use, being e.g. exposed within a sales point or when being stored. Preferentially, when being arranged on the support the first wall may define a bottom wall.

Preferentially, main body 2 may also comprise a side wall 4 being (fixedly) connected to the first wall and extending, along longitudinal axis A, from the first wall.

Preferentially, main body 2 may also comprise a second wall 5 opposite to the first wall and being (fixedly) connected to side wall 4.

Preferentially, side wall 4 may be interposed between the first wall and second wall 5.

Preferentially, second wall 5 may define a top wall of package 1, e.g. when package 1 is arranged on a support.

According to the shown non-limiting embodiment, the first wall and second wall 5 may be inclined with respect to one another. In particular, second wall 5 may be inclined with respect to the first wall and/or longitudinal axis A.

In particular, second wall 5 may define a slanted top or may define a portion of a gable-top.

Alternatively, the first wall and second wall 5 may be substantially parallel to one another.

According to some preferred non-limiting embodiments, second wall 5 may carry and/or comprise the designated pour opening and opening device 3 may be connected to second wall 5.

According to some preferred non-limiting embodiments, package 1, preferentially main body 2, may comprise an inner space configured to contain and/or containing the pourable product. In particular, the first wall, side wall 4 and second wall 5 may delimit the inner space.

According to some preferred non-limiting embodiments, second wall 5 may comprise a transversal seal portion 6, e.g. extending transversal, preferentially perpendicular, to longitudinal axis A and/or parallel to second transversal axis C.

In particular, transversal seal portion 6 results from transversally sealing and cutting the tube from which main body 2 is formed during production.

Additionally, each package 1, preferentially main body 2, may comprise a longitudinal seal 16. Longitudinal seal 16 may e.g. result from the overlapping and longitudinal sealing of longitudinal edges of the web of packaging material.

With particular reference to Figures 1 and 2, opening device 3 may comprise a coupling portion 7 connected to main body 2 about the designated pour opening and a lid 8 coupled to coupling portion 7.

In particular, coupling portion 7 may define the first portion and lid 8 may define the second portion of opening device 3.

With particular reference to Figures 2 to 4, opening device 3, preferentially coupling portion 7, may comprise a collar 9 extending along a central axis E and, preferentially, may define and/or delimit a flow channel 10.

Additionally, collar 9 may be aligned with respect to the designated pour opening.

In use, the pourable product flows from the inner space of main body 2 into flow channel 10 and out of flow channel 10.

More specifically, flow channel 10 may extend between a pouring outlet 11 (of collar 9) configured to allow for the outpouring of the pourable product and an inlet 12 (of collar 9) configured to allow for the introduction of the pourable product into flow channel 10.

Preferentially, lid 8 may be connected to collar 9 and may be configured to selectively open and close pouring outlet 11. Preferentially, lid 8 may be movable between a closed position and an open position in which lid 8, respectively closes and opens, pouring outlet 11, so as to, respectively, impede and allow the outflow of the pourable product from flow channel 10.

More preferentially, lid 8 may be angularly movable about a hinge axis G. More specifically, lid 8 may be angularly movable about hinge axis G so as to move lid 8 between the closed position and the open position.

In further detail, lid 8 may be in a first angular position with respect to hinge axis G when being in the closed position and in a second angular position with respect to hinge axis G when being in the open position.

With particular reference to Figure 2, opening device 3 may also comprise a coupling ring 14 coupled to and surrounding collar 9.

Additionally, lid 8 may be hinged to coupling ring 14.

Moreover, opening device 3 may comprise a hinge 15 hinging lid 8 to coupling ring 14. Hinge 15 may define hinge axis G.

According to some preferred non-limiting embodiments, opening device 3, preferentially coupling portion 7, may comprise a base frame 13 fixing and/or configured to fix opening device 3 to package 1, preferentially main body 2, more preferentially second wall 5, and about the designated pour opening.

Preferentially, collar 9 may extend from base frame 13.

In further detail, base frame 13 may be connected to a rim delimiting the designated pour opening.

With particular reference to Figures 2 to 5, opening device 3, preferentially coupling portion 7, comprises a closing element 20 configured to close and/or closing the designated pour opening.

In more detail, closing element 20 may be controllable between an active position (see Figures 2 to 4) in which closing element 20 is configured to cover and/or close the designated pour opening and an inactive position (not shown) in which closing element 20 may be configured to free the designated pour opening. Prior to a first-time movement of closing element 20 from the active position to the inactive position, closing element 20 is configured to seal the designated pour opening and the inner space of main body 2. After the first-time movement of closing element 20 from the active position to the inactive position, it may be possible to newly place closing element 20 in the active position for covering (but not sealing) the designated pour opening.

In more detail, closing element 20 may be rupturably and/or detachably connected to an inner surface 21 of collar 9. Moreover, after being moved from the active position to the inactive position for the first time, closing element 20 loses the rupturable and/or detachable connection to inner surface 21 and, e.g. after having been newly placed in the active position, closing element 20 solely contacts inner surface 21.

Preferentially, closing element 20 may be made as a single piece together with collar 9.

In more detail, closing element 20 may be connected to collar 9, preferentially inner surface 21 of collar 9, by a breakable portion 19 that is irreversibly broken when the closing element 20 is moved from the active position to the inactive position for the first time.

In further detail, closing element 20 may be arranged within flow channel 10, in particular when being in the active position.

Preferentially closing element 20 may be coaxially positioned with respect to collar 9 and/or central axis E.

With particular reference to Figures 2 to 5, closing element 20 may comprise a main wall 22 configured to cover the designated pour opening and detachably and/or rupturably attached to collar 9.

More specifically, central axis E may be perpendicular to closing element 20, preferentially to main wall 22.

Preferentially, closing element 20 may also comprise a plurality of radially extending ridge elements 23, in the specific case shown three.

More specifically, main wall 22 may comprise a peripheral portion 24, preferentially having an annular, more preferentially a circular, shape.

Additionally, main wall 22 may also comprise a center 25.

In further detail, each ridge element 23 may extend along a respective longitudinal axis F from peripheral portion 24 towards center 25.

Preferentially, each ridge element 23 may be integral to main wall 22.

Preferentially, each ridge element 23 may protrude from main wall 22 towards pouring outlet 11.

According to some preferred non-limiting embodiments, each ridge element 23 may comprise a first end 30 and a second end 31 opposite to first end 32. Each first end 30 may be arranged at peripheral portion 24. Preferentially, each second end 31 may be distanced from center 25 (i.e. each ridge element 23 does not extend up to center 25, even though being adjacent to center 25).

According to the example shown, two ridge elements 23 may be connected to one another at their respective second ends 31.

Preferentially, main wall 22 may comprise a first face 32 and a second face 33 opposite to first face 32. In particular, first face 32 and second face 33 are configured to respectively face away from and to face towards the designated pour opening.

Preferentially, opening device 3 can be molded such that the separation membrane is detached from the web of packaging material and adheres to zones of first face 32.

Preferentially, each ridge element 23 may extend from first face 32.

In further detail, each ridge element 23 may comprise an elongated top portion, preferentially extending along the respective longitudinal axis F, two flanks laterally extending from the top portion (and being inclined with respect to the top portion) and a front portion (in particular, extending from the top portion at the respective second end 31 of the respective ridge element 32).

Preferentially, ridge elements 23 may be angularly displaced from one another about central axis E. More preferentially, ridge elements 23 may be unevenly distributed about central axis E.

According to the example shown, closing element 20 may comprise at least three ridge elements 23 or exactly three ridge elements 23.

With particular reference to Figures 2 to 5, opening device 3, preferentially coupling portion 7, may comprise a connecting structure 37 connected to closing element 20, preferentially main wall 22, more preferentially first face 32, and to lid 8. Preferentially, connecting structure 37 may be connected to peripheral portion 24.

Preferentially, connecting structure 37 may couple closing element 20, preferentially main wall 22 to lid 8 such that any movement of lid 8 results in a concurrent movement of closing element 20. For example, movement of lid 8 between the closed position and the open position results in movement of closing element 20 between the active position and the inactive position.

It is to be noted that in Figure 2, lid 8 is in the open position, while closing element 20 is in the active position and connecting structure 37 is not attached to lid 8. This is, however, only for representation purposes within the description of the present application, while such a situation does not occur for a real opening device 3. In particular, Figure 2 is represented in order to emphasize a particular aspect of the present solution, which will be explained further below.

Preferentially, connecting structure 37 may be integrally connected to closing element 20, preferentially main wall 22, more preferentially peripheral portion 24.

Preferentially, collar 9, closing element 20, base frame 13 and connecting structure 37 may be integrally formed, in particular by means of a molding process of a molten polymer.

Preferentially, collar 9, closing element 20, base frame 13 and connecting structure 37 may be formed during a molding process, more preferentially during molding of opening device 3 onto the respective packaging blank.

Furthermore, lid 8 may be coupled to collar 9 after formation of collar 9 and closing element 20.

Additionally, lid 8 may be sealed and/or fused and/or bonded to connecting structure 37 after applying lid 8 to collar 9.

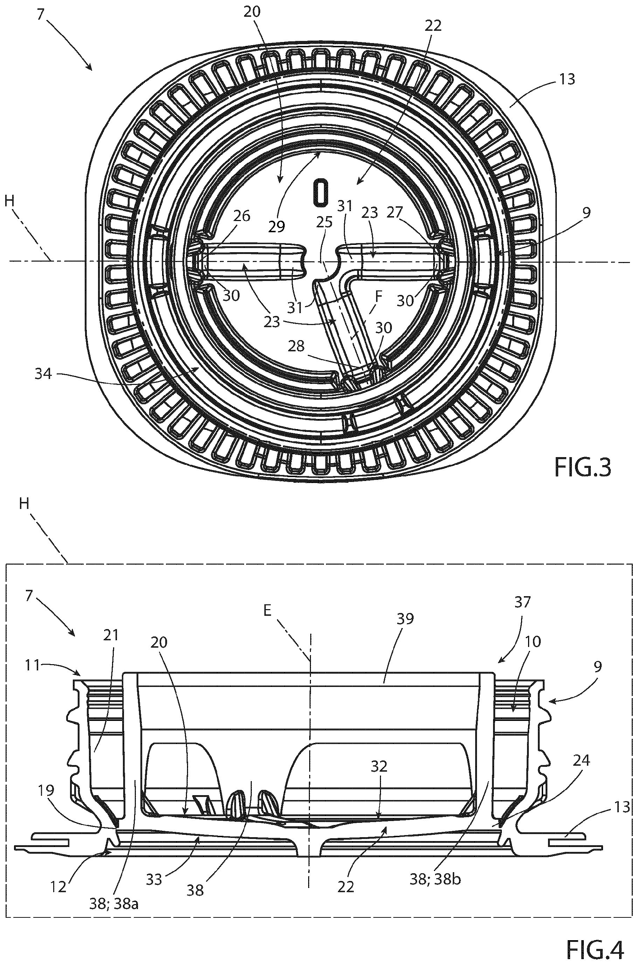

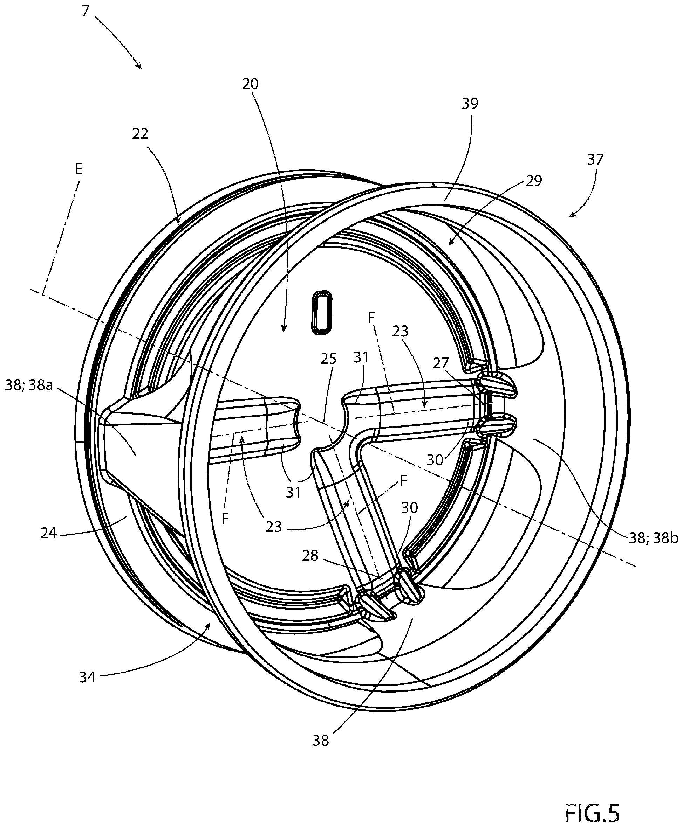

With particular reference to Figures 4 and 5, opening device 3, preferentially connecting structure 37, may further comprise a plurality of leg elements 38 connected to and extending from closing element 20, preferentially main wall 22, more preferentially peripheral portion 24.

Preferentially, leg elements 38 may be made as a single piece together with closing element 20, preferentially also together with connection structure 37.

In more detail, leg elements 38 may be angularly displaced from one another about central axis E. Preferentially, leg elements 38 may be unevenly distributed about central axis E.

Preferentially, leg elements 38 may protrude from closing element 20, preferentially main wall 22, more preferentially peripheral portion 24, towards pouring outlet 11 and/or substantially parallel to central axis E and/or collar 9.

More specifically, each leg element 38 may be integrally connected to closing element 20, preferentially main wall 22, more preferentially peripheral portion 24.

Additionally, each leg element 38 may comprise a first terminal portion connected to closing element 20 and a second terminal portion opposite to the respective first terminal portion.

Preferentially, opening device 3, preferentially coupling portion 7, may comprise a coupling body, in particular a coupling ring 39, (integrally) connected to leg elements 38, preferentially the respective second terminal portions. Moreover, coupling ring 39 may be connected to, preferentially sealed and/or bonded and/or fused, to lid 8.

With particular reference to Figures 4 and 5, each ridge element 23 may be associated to one respective leg element 38. Preferentially, each ridge element 23 and the respective leg element 38 may be connected to one another. More preferentially, each ridge element 23 may contact the respective first terminal portion.

In more detail, each ridge element 23 may extend from one respective leg element 38 and towards center 25 and/or may contact the respective leg element 38.

Preferentially, the number of leg elements 38 may equal the number of ridge elements 23.

According to some preferred non-limiting embodiments, each leg element 38 may be arranged at the same angular position with respect to central axis E as one respective ridge element 23.

Moreover, one of leg elements 38 may be farther away from hinge axis G and/or hinge 15 than the other leg elements 38. In the following, we will distinguish this specific leg element 38 by referring to it as main leg element 38a.

It should be noted that main leg element 38a is the leg element, which, when lid 8 begins to be controlled from the closed position to the open position for the first time, is subject to higher stress compared to the other leg elements 38.

The position of each leg element 38 may be defined in terms of an angular distance from hinge axis G and/or hinge 15 with respect to central axis E. Hinge axis G and/or hinge 15 may be considered to be arranged at a determined angular position and the respective angular distance of each leg element 38 (38a) from hinge axis G and/or hinge 15 may be intended to be the difference between the determined angular position and the angular position of the specific leg element 38 (38a).

With reference to the specific example shown, if e.g. hinge axis G (and accordingly of hinge 15) is considered to be arranged at the determined angular position, leg element 38a is arranged at an angular position of 180° from the determined angular position with respect to central axis E and, accordingly, the angular distance between hinge axis G and leg element 38a equals 180°. Moreover, the leg element 38 facing leg element 38a is arranged at an angular position of 0° from the determined angular position with respect to central axis E and, accordingly, the annular distance between hinge axis G and/or hinge 15 and the leg element 38 facing leg element 38a is 0°. Furthermore, the third leg element 38 shown in the specific non-limiting example is arranged at an angular position of about 70° from the determined angular position with respect to central axis E and, accordingly, the distance between hinge axis G and/or hinge 15 and the third leg element 38 equals 70°.

Hence, main leg element 38a is the leg element 38 being the farthest away from hinge axis G and/or hinge 15. In particular, one understands that the largest possible distance of a leg element 38 from hinge axis G and/or hinge 15 is 180°.

Additionally, main leg element 38a may be associated to a first portion of collar 9 and hinge axis G and/or hinge 15 may be associated to a second portion of collar 9. In particular, the first portion and the second portion are opposite to one another with respect to central axis E and or center 25.

Additionally, main leg element 38a may be intersected by an intersection plane H comprising central axis E. Preferentially, also the ridge element 23 associated to (e.g. connected to) main leg element 38a may be intersected by intersection plane H and intersection plane H may also comprise the respective longitudinal axis F.

Preferentially, main leg element 38a may be symmetric with respect to intersection plane H. More preferentially, also the respective ridge element 23 associated to ridge element 23 may be symmetric with respect to intersection plane H.

Advantageously, leg elements 38 (including main leg element 38a) may be arranged asymmetric with respect to one another and with respect to intersection plane H.

In further detail, main leg element 38a may be arranged at a first angular position 26 with respect to central axis E.

Moreover, opening device 3 may comprise a second leg element 38, being arranged at a second angular position 28 with respect to central axis E.

Moreover, opening device 3 may comprise a third leg element 38, being arranged at a third angular position 27 with respect to central axis E.

Preferentially, leg element 38a may be defined to be arranged at an angular position of 0°. Moreover, following such a definition and assuming that a position angle increases in a counter-clockwise direction when viewing leg elements 38 (38a) and closing element 20 from the top, a second position angle corresponding to the second angular position 28 may be larger than a first position angle corresponding to the first angular position 26 and smaller than a third position angle corresponding to third angular position 27.

Preferentially, an angular distance between first angular position 26 and second angular position 28 may range from 85° to 135°, preferentially from 100° to 120°.

In the example shown, the angular difference between first angular position 26 and second angular position 28 may substantially equal 110°.

Preferentially, an angular difference between first angular position 26 and third angular position 27 may range from 160° to 210°, preferentially from 170° to 190°.

In the example shown, the angular difference between first angular position 26 and third angular position 27 substantially equals 180°.

According to the example shown, intersection plane H intersects a second leg element 38 (also indicated with 38b in Figures 4 and 5), preferentially second leg element 38 (38b) being symmetric with respect to intersection plane H.

Preferentially, ridge element 23 being associated to main leg element 38a may be arranged at first angular position 26 too.

Additionally, one ridge element 23 may be arranged at second angular position 28, and preferentially a further ridge element 23 may be arranged at third angular position 27.

Advantageously, a free zone 29 of opening device 3 may be defined as a zone which is free of any leg elements 38. In the example shown, the free zone 29 extends from third angular position 27 to first angular position 26.

Additionally, leg elements 38 (including 38a) are arranged at an occupied zone 34. In the example shown, the occupied zone 34 extends from first angular position 26 to third angular position 27.

Preferentially, as explained above, an angular difference between third angular position 27 and first angular position 26 equals at least 160° (i.e. this angular difference equals or is larger than 160°).

In other words, the free zone 29 extends along an angular length of at least 160°.

In particular, as explained above, leg element 38a may be defined to be arranged at an angular position of 0°. Moreover, following such a definition and assuming that a position angle increases in a counter-clockwise direction when viewing leg elements 38 (38a) and closing element 20 from the top, the position angle corresponding to any position of the free zone 29 (extending between third angular position 27 and first angular position 26) is larger than a position angle corresponding to third angular position 27, i.e. the third position angle as previously defined.

According to an alternative embodiment not shown, opening device 3 may comprise only two leg elements 38 (including main leg element 38a). According to such an embodiment, the occupied zone 34 may be defined between first angular position 26 and second angular position 28 and the free zone 29 may be defined between second angular position 28 and first angular position 26.

Preferentially, opening device 3, preferentially coupling portion 7, may be arranged such that the free zone 29 (being void of any leg elements 38) may be closer to a center of second wall 5 and/or transversal seal portion 6 than the occupied zone 34 (being provided with leg elements 38) .

Hence, according to some preferred non-limiting embodiments, a portion of main wall 22 being void of any ridge element 23 is associated to free zone 29.

Similarly, according to some preferred non-limiting embodiments, a portion of main wall 22 being provided with ridge element 23 is associated to occupied zone 34.

With particular reference to Figure 1, lid 8 may comprise a covering portion 40 configured to cover and/or covering pouring outlet 11 and a gripping lip 41 radially protruding from covering portion 40 and being configured to facilitate movement of lid 8 from the closed position to the open position.

Preferentially, main leg element 38a may be closer to gripping lip 41 than the other leg element(s) 38.

Preferentially, gripping lip 41 may radially extend along a direction substantially parallel to transversal seal portion 6, in particular with lid 8 being in the closed position.

Preferentially, gripping lip 41 may be configured to be engaged by a user when moving lid 8 from the closed position to the open position.

It should be noted that each package 1 may be immediately after its formation arranged in an initial configuration in which lid 8 and closing element 20 may be respectively in the closed position and in the active position. Package 1 may be distributed and/or sold to a user while being in the initial configuration.

In use, a user receives package 1 with lid 8 and closing element 20 being respectively in the closed position and the active position so as to respectively cover pouring outlet 11 and the designated pouring outlet.

Prior to the first control of lid 8 from the closed position to the open position and of closing element 20 from the active position to the inactive position, closing element 20 is fixed to, i.e. integral with, inner surface 21.

The user, in order to access the pourable product, needs to control lid 8 from the closed position to the open position leading to a movement of closing element 20 from the active position to the inactive position. In this way, breakable portion is broken and closing element 20 is detached from inner surface 21. This then allows the pourable product to flow from the inner space through flow channel 10 and out of flow channel 10 through pouring outlet 11.

Each time closing element 20 is arranged again in the active position (by moving lid 8 in the closed position) closing element 20 covers the designated pour opening.

According to another aspect of the present invention, opening device 3 may be coupled to main body 2 by means of a molding process. In particular, opening device 3 may be coupled to main body 2 by molding the first portion of opening device 3 to the respective packaging blank.

In order to do so, a mold needs to be provided, which is configured to allow for molding of opening device 3 onto main body 2 and/or the packaging blank. In more detail, the mold may be configured to allow for molding and forming the first portion of opening device 3.

In particular, the mold may be configured to allow for the formation of base frame 13, collar 9, closing element 20 and connecting structure 37.

The advantages of opening device 3 and/or of package 1 according to the present invention will be clear from the foregoing description.

In particular, the risk of a splashing of the pourable product when closing element 20 is controlled from the active position to the inactive position for the first time is reduced because the leg elements 38, being asymmetric, exert a progressive pulling action on the closing element 22. In addition, the closing element 22 is progressively deformed during the opening phase.

In addition, by providing asymmetric leg elements 38 it is possible to reduce the overall stiffness of the assembly formed by closing element 22, leg elements 38 and lid 8.

In addition, the risk of a splashing is reduced owing to the fact that due to the asymmetric arrangement of leg elements 38 the point where the connection of closing element 20 with collar 9 finally breaks may be controlled so as to be in a desired position.

A further advantage resides in that the portion of opening device 3 having free zone 29 detaches from inner surface 21 later than occupied zone 34. This allows to further reduce the risk of a splashing, in particular for packages 1 with a slanted top in which the portions of second wall 5 being adjacent to transversal seal portion 6 are more distanced from the bottom wall of the package than the portions of second wall 5 being further away from transversal seal portion 6. In this case, the portion of the closing element 22 which is the last that is detached from the inner surface 21 is located in the free zone 29.

Additionally, the overall energy released to package 1 and the content thereof during the separation of closing element 20 from collar 9 is lower in comparison to the known solutions.

Furthermore, the risk of a splashing due to the occurrence of an elastic spring back of package 1 after the first time-control of closing element 20 from the active position to the inactive position is mitigated.

Clearly, changes may be made to opening device 3 and/or package 1 as described herein without, however, departing from the scope of protection as defined in the accompanying claims.

## Claims

1. Opening device (3) for a package (1) having a designated pour opening and being filled with a pourable product;
the opening device (3) comprises:
- a collar (9) having a central axis (E) and a pouring outlet (11);
- a lid (8) connected to collar (9) and angularly movable about a hinge axis (G) between a closed position and an open position in which lid (8), respectively closes and opens, the pouring outlet (11);
- a closing element (20) configured to close the designated pour opening, being made as a single piece together with the collar (9) and being detachably and/or rupturably attached to the collar (9);
- a plurality of leg elements (38) connected to and protruding from the closing element (20) and being coupled to the lid (8);
wherein one main leg element (38a) of the plurality of leg elements (38) is farther away from the hinge axis (G) than the other leg elements (38);
wherein the main leg element (38a) is intersected by an intersection plane (H) comprising the central axis (E);
wherein the leg elements (38; 38a) are arranged asymmetric with respect to one another and with respect to the intersection plane (H).

2. Opening device according to claim 1, wherein the main leg element (38a) is symmetric with respect to the intersection plane (H); or
wherein the main leg element (38a) and another leg element (38) are intersected by and symmetric with regard to the intersection plane (H).

3. Opening device according to claim 1 or 2, wherein the main leg element (38a) is arranged at a first angular position (26) with respect to the central axis (E);
wherein a further leg element (38) is arranged at a second angular position (28) with respect to the central axis (E);
wherein an angular difference between the first angular position (26) and the second angular position (28) ranges between 85° to 135°.

4. Opening device according to any one of the preceding claims, comprising three leg elements (38; 38a);
wherein the main leg element (38a) is arranged at a first angular position (26) with respect to the central axis (E), a second leg element (38) is arranged at a second angular position (28) with respect to the central axis (E) and a third leg element (38) is arranged at a third angular position (27) with respect to the central axis (E);
wherein the second angular position (28) is interposed between the first angular position (26) and the third angular position (27);
wherein no further leg element is arranged at an angular position interposed between the third angular position (27) and the first angular position (26).

5. Opening device according to claim 4, wherein an angular difference between the first angular position (26) and the third angular position (27) ranges from 160° to 210°.

6. Opening device according to claim 5, wherein the angular difference between the first angular position (26) and the third angular position (27) equals substantially 180°.

7. Opening device according to any one of the preceding claims, wherein the closing element (20) comprises:
- a main wall (22) configured to cover the designated pour opening and detachably and/or rupturably attached to the collar (9); and
- a plurality of radially extending ridge elements (23), each one extending along a respective longitudinal axis (F) and extending from a peripheral portion (24) of the main wall (22) towards a center (25) of the main wall (22);
wherein each ridge element (23) is associated to one respective leg element (38, 38a);
wherein the leg elements (38, 38a) extend from the peripheral portion (24);
wherein the ridge element (23) associated to the main leg element (38a) is intersected by the intersection plane (H) and the intersection plane (H) comprises also the respective longitudinal axis (F) of the ridge element (23).

8. Mold configured to allow for molding the opening device (3) according to any one of the proceeding claims onto a main body (2) of a package (1) for a pourable product and/or onto a precursor of a package (1) for a pourable product.

9. Package (1) filled and/or fillable with a pourable product comprising a main body (2) having a designated pour opening and being formed from a multilayer composite packaging material and an opening device (3) coupled to the main body (2) and about the designated pour opening;
the opening device (3) comprises:
- a collar (9) having a central axis (E) and a pouring outlet (11);
- a lid (8) connected to collar (9) and angularly movable about a hinge axis (G) between a closed position and an open position in which lid (8), respectively closes and opens, the pouring outlet (11);
- a closing element (20) configured to close the designated pour opening, made as a single piece together with the collar (9) and being detachably and/or rupturably attached to the collar (9);
- a plurality of leg elements (38) connected to and protruding from the closing element (20) and being coupled to the lid (8);
wherein one main leg element (38a) of the plurality of leg elements (38) is farther away from the hinge axis (G) than the other leg elements (38);
wherein the main leg element (38a) is intersected by an intersection plane (H) comprising the central axis (E);
wherein the leg elements (38; 38a) are arranged asymmetric with respect to one another and with respect to the intersection plane (H).

10. Package according to claim 9,
wherein the main leg element (38a) is symmetric with respect to the intersection plane (H); or
wherein the main leg element (38a) and another leg element (38) are intersected by and symmetric with regard to the intersection plane (H).

11. Package according to any claim 9 or 10, wherein the main leg element (38a) is arranged at a first angular position (26) with respect to the central axis (E);
wherein a further leg element (38) is arranged at a second angular position (28) with respect to the central axis (E);
wherein an angular difference between the first angular position (26) and the second angular position (28) ranges between 85° to 135°.

12. Package according to any one of claims 9 to 11, wherein the opening device (3) comprises three leg elements (38, 38a);
wherein the main leg element (38a) is arranged at a first angular position (26) with respect to the central axis (E), a second leg element (38) is arranged at a second angular position (28) with respect to the central axis (E) and a third leg element (38) is arranged at a third angular position (27) with respect to the central axis (E);
wherein the second angular position (28) is interposed between the first angular position (26) and the third angular position (27);
wherein no further leg element is arranged at an angular position interposed between the third angular position (27) and the first angular position (26).

13. Package according to any one of claims 9 to 12, wherein the opening device (3) comprises a free zone (29) void of any leg elements (38; 38a) and an occupied zone (34) comprising the leg elements (38; 38a);
wherein the free zone (29) is delimited by the main leg element (38a) and a further leg element (38);
wherein an angular difference between the angular position of the further leg element (38) and the angular position of the main leg element (38a) equals at least 160°;
wherein the free zone (29) is closer to the transversal seal portion (6) than the occupied zone (34).

14. Package according to any one of claims 9 to 13, wherein the closing element (20) comprises:
- a main wall (22) configured to cover the designated pour opening and detachably and/or rupturably attached to the collar (9); and
- a plurality of radially extending ridge elements (23), each one extending along a respective longitudinal axis (F) and extending from a peripheral portion (24) of the main wall (22) towards a center (25) of the main wall (22);
wherein each ridge element (23) is associated to one respective leg element (38, 38a);
wherein the leg elements (38, 38a) extend from the peripheral portion (24);
wherein the ridge element (23) associated to the main leg element (38a) is intersected by the intersection plane (H) and the intersection plane (H) comprises also the respective longitudinal axis (F) of the ridge element (23).
